# EUROPEAN PATENT APPLICATION

(11) **EP 1 009 183 A1**
(43) Date of publication of application: **14.06.2000**
(21) Application number: 99123953.4
(22) Date of filing: 06.12.1999
(51) Int. Cl.: H04Q 7/38

(54) **Selecting a system in multi-system environment by monitoring search codes**

(30) Priority: 08.12.1998 JP 34828398
(71) Applicant: MATSUSHITA ELECTRIC INDUSTRIAL CO., LTD., Kadoma-shi, Osaka-fu, 571 (JP)
(72) Inventor: Miya, Kazuyuki, Kawasaki-shi, Kanagawa 215-0021 (JP)
(74) Representative: Grünecker, Kinkeldey, Stockmair & Schwanhäusser Anwaltssozietät

(57) **Abstract**

First search codes for a public system are made common in the TDD and FDD systems. A mobile station decides on the connection or switching to either system by measuring received levels of both first search codes in the FDD and TDD systems. In private systems, a different first search code is used for each system. Accordingly, the first search codes are made known in a terminal supporting also private modes. Between the private and public systems, a mobile station decides on the connection or switching to either system by measuring received levels of both first search codes in the private and public systems.

## Description

### BACKGROUND OF THE INVENTION

### Field of the Invention

The present invention relates to a communication terminal apparatus and a radio communication method used in a digital radio communication system.

### Description of the Related Art

As a multiple access system for use in the next generation mobile communication systems, a CDMA (Code Division Multiple Access) system is developed. In this multiple access system, duplex systems such as a FDD (Frequency Division Duplex) system and a TDD (Time Division Duplex) system are employed. In the FDD system, communications are performed using different frequency bands for transmission and reception. In the TDD system which is the transmission/reception same band system and also called Ping-Pone system, communications are performed using time slots for transmission and reception with the same radio frequency used.

Recently, in the CDMA system, the systems using the FDD system and the TDD system are studied and developed, and the standardization works therefor have been proceeded. Therefore, even in communication terminals, it is expected that common devices (dual mode terminal) capable of using the FDD system and the TDD system will be developed in the future. Such common devices will have a function for enabling the independent connection to each system.

On the other hand, in the radio communication system, there are a so-called public system in which a specific operator company provides services to unspecified users, and a private system in which a person or a firm provides services to specific users, for example, staffs in the firm.

However, in the common devices capable of using the FDD and TDD systems in the CDMA system (hereinafter, respectively referred to as CDMA/FDD system and CDMA/TDD system), such devices only have the function for enabling the independent connection to each system, and do not have a function for selecting a system corresponding to communication conditions and propagation environments to switch. In addition, it is not performed either in the public system and private system to select a system corresponding to communication conditions and propagation environments to switch.

As described above, although various different systems, for example, the FDD and TDD systems, and the public and private systems, are used, it has not been performed currently to select a system corresponding to communication conditions and propagation environments to switch between different systems, and specific solutions therefor have not been proposed either.

### SUMMARY OF THE INVENTION

An object of the present invention is to a communication terminal apparatus and a radio communication method each capable of selecting a system corresponding to communication conditions and propagation environments to switch between different systems.

The inventor of the present invention paid attention to masked symbols used in a cell search performed, for example, in an initial synchronization acquisition operation when a mobile station is turned on, and in a cell switching accompanied by a moving of the mobile station (hand-over), found out that when the masked symbol structure is common to each system, it is possible to select a system corresponding to communication conditions and propagation environments to switch between different systems, and achieved the present invention.

In the FDD system, studied is the masked symbol structure as shown in "Fast Cell Search Algorithm using Long Code Masking in DS-CDMA Asynchronous Cellular System" by K.Higuchi, M.Sawahashi and F.Adachi (IEICE RCS96-122, 1997-01). Further in the TDD system, the introduction of almost the same masked symbol structure is studied, as shown in "Wideband CDMA system in TDD-mode Operation for IMT-2000" by K.Miya, O.Kato et al. (IEICE Trans. Commun., Vol.E81-B, No.7, July 1998).

The gist of the present invention is, in different systems (public/private systems in the FDD system and those in the TDD system) having a symbol spread only with a short code (masked symbol) in the downlink control channel (CCH), to achieve the selection and switching (hand-over) of a system to connect at the time power is supplied, and thereafter at the time for calling or waiting, while performing the fast cell search, using such a masked symbol.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1A is a diagram illustrating a slot structure in a CDMA/FDD system;
FIG.1B is a diagram illustrating a slot structure in a CDMA/TDD system;
FIG.2A is a diagram illustrating a frame structure in the CDMA/FDD system;
FIG.2B is a diagram illustrating a frame structure in the CDMA/TDD (public) system;
FIG.2C is a diagram illustrating a frame structure in the CDMA/TDD (private) system;
FIG.3 is a diagram illustrating frequency bands in the CDMA/FDD and CDMA/TDD systems;
FIG.4 is a block diagram illustrating a configuration of a communication terminal apparatus according to a first embodiment of the present invention;
FIG.5 is a block diagram illustrating a configuration of a base station apparatus for performing a radio communication with the communication terminal apparatus according to the first embodiment of the present invention;
FIG.6 is a block diagram illustrating a detailed structure of a spreading circuit in the base station apparatus illustrated in FIG.5;
FIG.7A to FIG.7C are diagrams each illustrating a relationship between systems, base stations and the communication terminal apparatus(es) in a radio communication system using the communication terminal apparatus of the present invention; and
FIG.8 is a diagram to explain timings for a system connection and hand-over in the communication terminal apparatus of the present invention.

### DETAILED DESCRIPTION OF THE PREFERRED EMBODIMENTS

Embodiments of the present invention are explained specifically below with reference to attached drawings.

### (First embodiment)

A communication terminal apparatus according to this embodiment is to achieve the selection and switching (hand-over) of a system between different systems in which a structure of masked symbol used in a cell-search is common to all systems.

This embodiment explains about the system selection and system switching between different systems which are the FDD and TDD systems in the CDMA system.

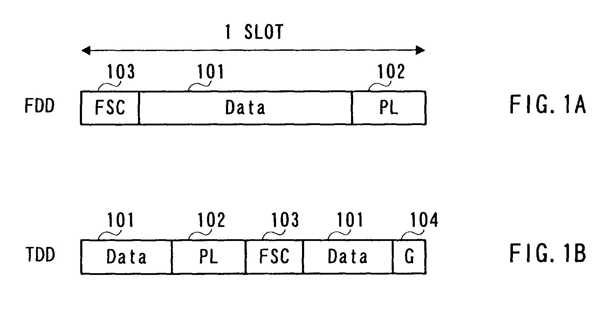

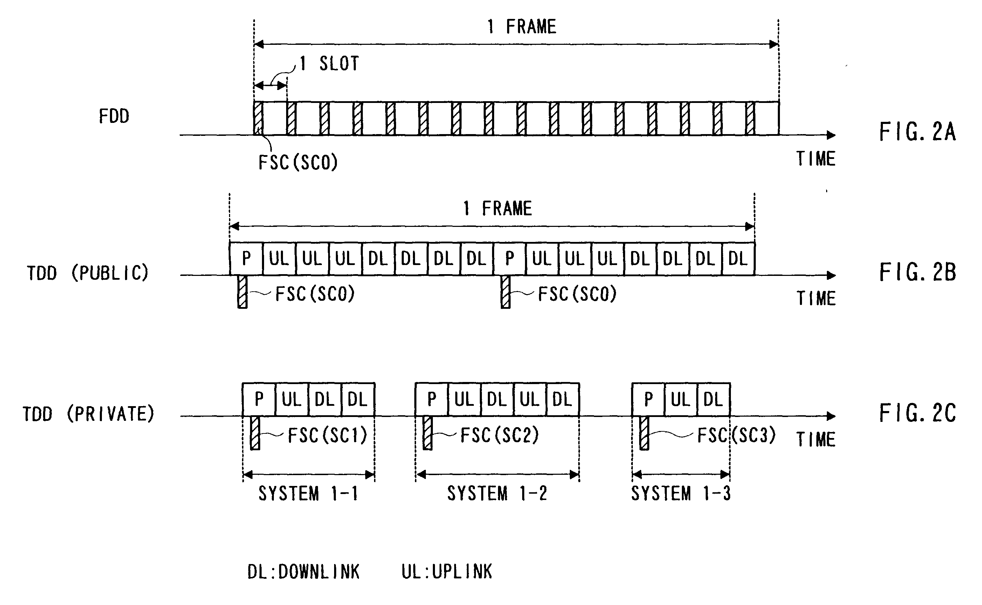

In the FDD system in the CDMA system, a symbol structure in a slot in the downlink control channel is as illustrated in FIG.1A. In other words, in the slot, first search code (FSC) 103 is inserted before data (Data) 101, and pilot symbol (PL) 102 that is a known signal is inserted after data 101. In the CDMA/FDD system, communications are performed using a frame structure, as illustrated in FIG.2A, composed of slots each with the structure as described above (in this case, a unit frame (for example, a single frame) has 16 slots).

On the other hand, in the TDD system in the CDMA system, a symbol structure in a slot in the control channel is as illustrated in FIG.1B. In other words, in the slot, pilot symbol (PL) 102 that is the known symbol and first search code (FSC) 103 are inserted before data (Data) 101, and guard interval (G) 104 is provided at the end of data 101. It is assumed that in the CDMA/TDD system, communications are performed using a frame structure, as illustrated in FIG.2B, composed of slots each with the structure as described above (1st and 9th slots for the downlink (DL) control channel, each followed by 3 slots for uplink (UL) traffic channel and 4 slots for the downlink traffic channel. In addition, the structure of the traffic channel is different from FIG.2B and does not have a masked symbol.

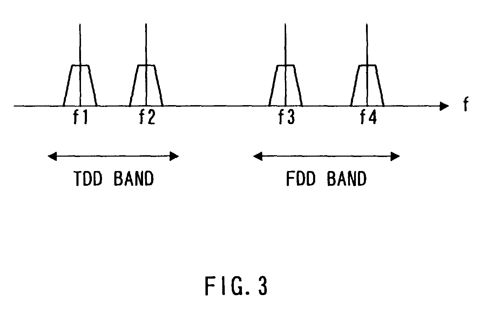

The used frequency bands are different between the FDD system and TDD system, as illustrated in FIG.3 (f1∼f2 for the FDD, and f3∼f4 for the TDD, in FIG.3), however the symbol structure with the masked symbol (first search code) is common to both systems, as illustrated in FIG.1A and FIG.1B. By the use of such a common masked symbol structure, the system selection and switching are performed between the FDD system and TDD system.

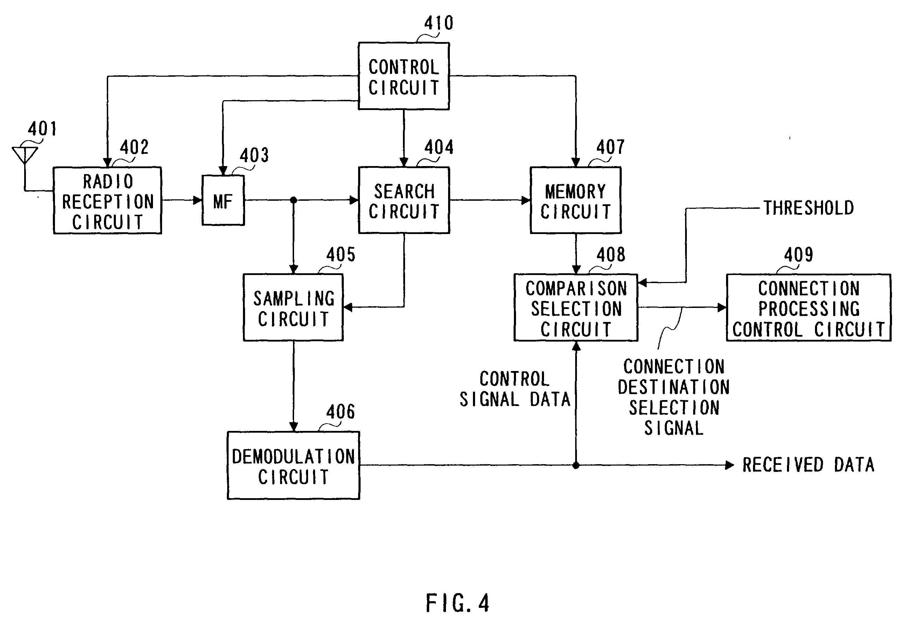

FIG.4 is a block diagram illustrating a configuration of a communication terminal apparatus according to the first embodiment of the present invention. In the radio communication apparatus, a received signal is received in radio reception circuit 402 through antenna 401. Radio reception circuit 402 executes predetermined radio reception processing on the received signal. The received signals is despread in matched filter 403. Then, with respect to a path of which a timing of a signal is detected in search circuit 404, the despread signal is sampled in sampling circuit 405, and demodulated in demodulation circuit 406 to be received data.

In addition, search circuit 404 identifies a timing of the first search code, while detecting a received level of the first search code, in a cell search performed, for example, in an initial synchronization acquisition operation when the power is turned on, and in a cell switching accompanied by a moving (hand-over). The received level is provided to memory circuit 407 to be stored. The received level stored in memory circuit 407 is provided to comparison selection circuit 408 to be subjected to received level comparison.

Comparison selection circuit 408 compares the received level of first search code to a threshold, and outputs a connection destination selection signal, indicative of switching to a system with the first search code of which the received level is higher than the threshold, to connection processing control circuit 409. Connection processing control circuit 409 executes the control over the connection processing to the system to connect according to the connection destination selection signal. Further, control circuit 410 controls radio reception circuit 402, matched filter 403, search circuit 404 and memory circuit 407, corresponding to the case where the respective signal in each system is received.

The signal demodulated in demodulation circuit 406 is provided to comparison selection circuit 408 to be used in the parameter calculation for the system selection.

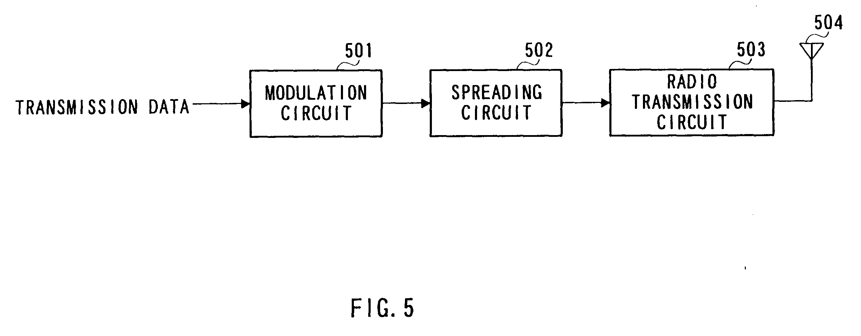

FIG.5 is a block diagram illustrating a configuration of a base station apparatus for performing a radio communication with the communication terminal apparatus according to the first embodiment of the present invention. In this base station apparatus, a control channel signal that is transmission data is subjected to the first modulation processing such as quadrature modulation in modulation circuit 501, and then provided to spreading circuit 502 to be subjected to the spreading with a predetermined spreading code therein. The thus modulated transmission signal is provided to radio transmission circuit 503 to be subjected to predetermined radio transmission processing, and then transmitted through antenna 504.

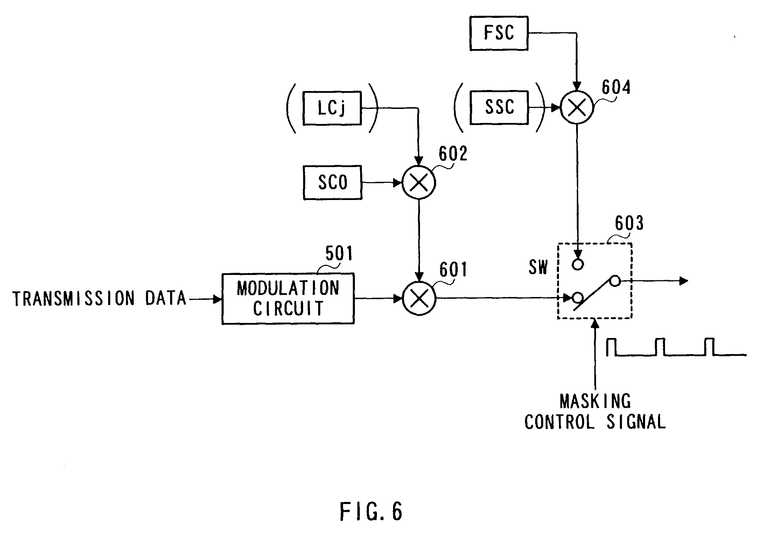

FIG.6 is a block diagram illustrating a detailed configuration of spreading circuit 502 in the above-described base station. In the apparatus, modulation circuit 501 modulates the control channel signal, and multiplier 601 multiplies the modulated signal by a code obtained by multiplying short code SC0 by long code LCj beforehand in multiplier 602.

In the resultant signal, the search code is multiplexed at a masked symbol position. The multiplexing of the search code is executed by a masking control signal. In other words, as the search code, first search code (FSC) for use in the detection of chip synchronization and reception timing and second search code (SSC) with the purpose of group identification are multiplexed in multiplexer 604, and the resultant code is multiplexed to the above-mentioned signal by switching in switch 603 according to the masking control signal.

The next description explains about the connection selection operation and switching operation between different systems in the radio communication system provided with the communication terminal apparatus with the above-mentioned configuration.

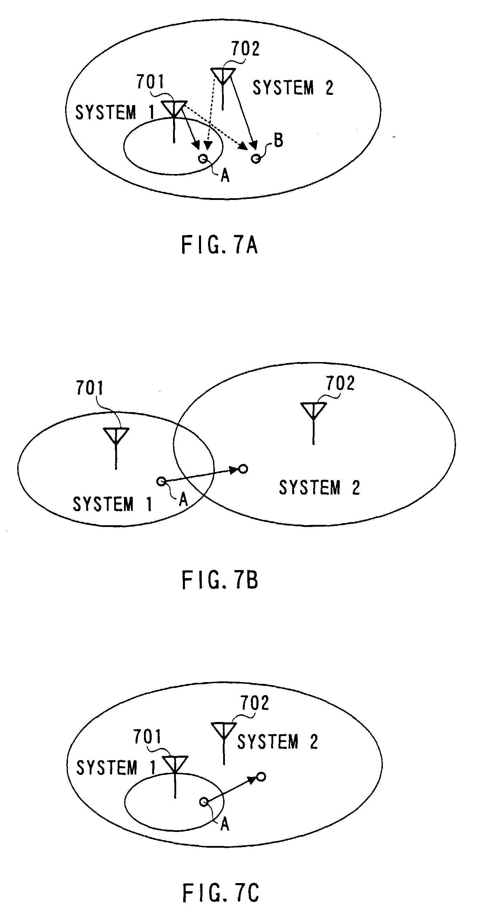

The following description explains about the case where communication terminal apparatus A illustrated in FIG.7A is turned on. In this case, system 1 is the CDMA/TDD system and system 2 is the CDMA/FDD system. In addition, the frame structure in the FDD system is as illustrated FIG.2A, and that in the TDD system is as illustrated in FIG.2B, each having the common structure by containing the first search code. Base stations 701 and 702 are each provided with the radio communication apparatus illustrated in FIG.5 and FIG.6, and communication terminal apparatuses A and B are each provided with the communication terminal apparatus illustrated in FIG.4.

Base station 701 transmits a signal in the FDD system illustrated in FIG.2A, and base station 702 transmits a signal in the TDD system illustrated din FIG.2B. Base stations 702 and 702 each time-multiplexes first search code FSC and second search code SSC at a position to be masked in the control channel signal that is transmission data. The first search code FSC and second search code SSC are multiplexed to the control channel signal, while being switched properly by switch 603 corresponding to the masking control signal with a pulse waveform illustrated in FIG.6.

In addition, the control channel signal is multiplied by a code, obtained by multiplying short code SC0 by long code LCj in multiplier 602, in multiplier 601. The thus processed signal is subjected to the predetermined radio transmission processing in radio transmission circuit 503, and then transmitted through antenna 504.

Communication terminal apparatus A receives signals with the common masked symbol structure from base stations 701 and 702. Since the respective signals from base stations 701 and 702 are signals containing the common masked symbol structure, the signals can be subjected to the same processing in a cell search even when the signals are used in different systems.

Communication terminal apparatus A first processes the signal in system 1 from base station 701. In other words, the apparatus A switches the frequency to that for the TDD band, and then executes the timing detection using the first search code in matched filter 402 and search code 404. Specifically, the apparatus A executes the despreading processing on a symbol spread only with the first search code common to each system (masked symbol), obtains the correlation value, and detects the position at which the highest correlation value is obtained, thereby executing the reception timing detection. The apparatus A stores a quality, for example, a received level of the first search code obtained at the detected timing in memory circuit 407.

The apparatus A next processes the signal in system 2 from base station 702. In other words, in the same way as the above-mentioned case, the apparatus A switches the frequency to that for the FDD band, executes the timing detection using the first search code in matched filter 402 and search code 404, and stores a received level of the first search code obtained at the detected timing in memory circuit 407. Further, the switching between processing for the signal in system 1 from base station 1 and that for the signal in system 2 from base station 2 is executed in control circuit 410.

In addition, the processing for the signal in system 1 from base station 701 is executed first in this case, however it may be possible to first execute the processing on the signal in system 2 from base station 702, and further possible to process signals from both base stations concurrently if there are not any problems in the hardware.

The respective received levels of signals in respective systems stored in memory circuit 407 are compared in comparison selection circuit 408. Comparison selection circuit 408 selects the system in which the received signal level is higher than the other, and outputs the connection destination selection signal indicative of the connection to the system with the higher signal level to connection processing control circuit 409.

For example, in communication terminal apparatus A in the case illustrated in FIG.7A, since the apparatus A is present in an area of system 1, under normal propagation environments, the signal from base station 701 (system 1) (solid line) has a high level, and the signal from base station 702 (system 2) (broken line) has a low level. Accordingly, comparison selection circuit 408 selects system 1 in which the signal level is high as a connection destination system, and connection processing to system 1 is executed in connection processing control circuit 409.

The same processing as in the above-mentioned case is executed when communication terminal apparatus B illustrated in FIG.7A is turned on. In other words, communication terminal apparatus B also receives signals with the common masked symbol structure from base stations 701 and 702. Then, in the same way as in the case of communication terminal apparatus A, the apparatus B executes the respective processing on signals from base stations 701 and 702, and stores the respective received levels of first search codes in respective systems in memory circuit 407. Comparison selection circuit 408 selects the system in which the received signal level is higher than the other, and outputs the connection destination selection signal indicative of the connection to the system with the higher signal level to connection processing control circuit 409.

For example, in communication terminal apparatus B in the case illustrated in FIG.7A, since the apparatus B is present in an area of system 2, under normal propagation environments, the signal from base station 702 (system 2) (solid line) has a high level, and the signal from base station 701 (system 1) (broken line) has a low level. Accordingly, comparison selection circuit 408 selects system 2 in which the signal level is high as a connection destination system, and connection processing to system 2 is executed in connection processing control circuit 409.

The next description explains about the case where communication terminal apparatus A illustrated in FIG.7B or FIG.7C performs a hand-over (HO) from system 1 to system 2.

Base station 701 transmits the signal in the TDD system illustrated in FIG.2A, and base station 702 transmits the signal in the FDD system illustrated in FIG.2B. Base stations 701 and 702 each time-multiplexes first search code FSC and second short code SSC at a position to be masked in the control channel signal that is transmission data. The first search code FSC and second search code SSC are multiplexed to the control channel signal as masking, while being switched properly by switch 603 corresponding to the masking control signal with the pulse waveform illustrated in FIG.6.

In addition, the control channel signal is multiplied by a code, obtained by multiplying short code SC0 by long code LCj in multiplier 602, in multiplier 601. The thus frame-constructed signal is subjected to the predetermined radio transmission processing in radio transmission circuit 503, and then transmitted through antenna 504.

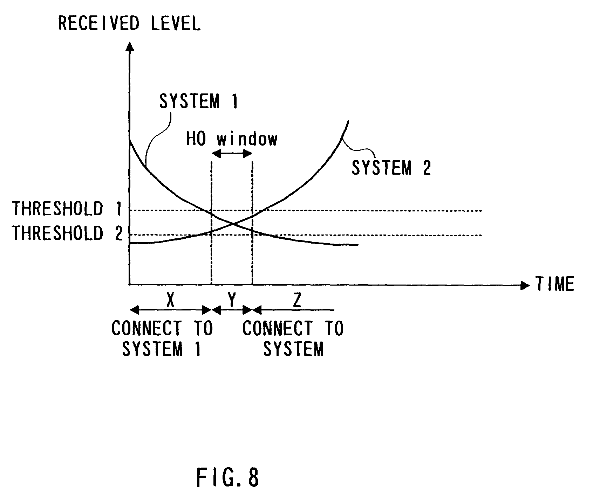

Communication terminal apparatus A communicates with base station 701 in system 1 (X area in FIG.8). As the communication terminal apparatus A comes close to the area of system 2, the received level of the first search code in the downlink control channel from base station 701 becomes lower. Then, when the received level in system 1 is decreased than threshold 1, while the received level in system 2 is increased over threshold 2, the apparatus A is in a hand-over state (Y area in FIG.8), and starts communicating also with base station 702 in system 2. Specifically, the apparatus A receives the signal with the common masked symbol structure also from base station 702, and executes initial connection processing to base station 702. Since the signals from base stations 701 and 702 are signals with the common masked symbol structure, it is possible to execute the same processing on the signals in the cell search even when the signals are used in different systems.

When the received level in system 2 exceeds threshold 1, and the received level in system 1 becomes lower than threshold 2, the apparatus A discontinues the connection with system 1, and connects only with system 2 to communicate with base station 702 (Z area in FIG.8). It is possible to connect to a different system also in this case.

AS described above, in this embodiment, by the use of signals with the common masked symbol structure in different systems, it is possible to detect the connection destination automatically between different systems (FDD/TDD).

### (Second embodiment)

The second embodiment explains about the case where a received level in either system is first measured among different systems to decide using a threshold whether or not a connection to the system is possible, and only when the received level is lower than the threshold, a received level in another system is measured to connect.

Communication terminal apparatus A receives signals with the common masked symbol structure respectively from base stations 701 and 702, and first processes the signal in system 1 from base station 701. In other words, the apparatus A executes timing detection with the first search code in matched filter 402 and search circuit 404. Specifically, the apparatus A executes despreading processing on a symbol spread only with the first search code which is common to each system (masked symbol), obtains the correlation value, and detects a position for the highest correlation value, thereby executes the timing detection.

Then, the apparatus executes a decision on the received level of the first search code at the detected timing using the threshold. When the detected received level exceeds the threshold, communication terminal apparatus A provides a connection destination selection signal indicative of the connection to system 1 to connection processing control circuit 409 to execute the connection processing to system 1.

On the other hand, when the above-mentioned received level is lower than the threshold, communication terminal apparatus A processes the signal with the common masked symbol structure in system 2 from base station 702. In other words, in the same way as in the above-mentioned case, the apparatus A executes the timing detection with the first search code in matched filter 402 and search code 404, and stores the received level of the first search code at the detected timing in memory circuit 407. In addition, control circuit 410 executes the switching between the processing for the signal in system 1 from base station 701 and that for the signal in system 2 from base station 702.

Then, the apparatus A executes the decision on the received level of the first search code at the detected timing using the threshold in the same way as in the above-mentioned case. When the detected received level exceeds the threshold, communication terminal apparatus A provides a connection destination selection signal indicative of the connection to system 2 to connection processing control circuit 409 to execute the connection processing to system 2.

As described above, since the received level in either system is first measured to decide using the threshold whether or not a connection to the system is possible, and only when the received level is lower than the threshold, the received signal in another system is measured to connect, the comparison processing between received levels is not necessary, and it is possible to execute the connection processing to an optimal system promptly.

In addition, in this embodiment, the signal in system 1 from base station 701 is first processed, however it may be possible to first process the signal in system 2 from base station 702.

### (Third embodiment)

This embodiment explains about the case where when a communication terminal decides a connection and switching, the terminal uses other parameter such as required transmit power with a propagation loss and interference amount taken into consideration, besides the received level of the first search code. These parameters are calculated using broadcast information (such as a base station transmit level and interference level in a base station) obtained by executing all a series of initial synchronization processing using a second search code besides the first search code and decoding data in a perch channel and broadcast channel. It is thus possible to select a system enabling the connection in the smallest output and a system with low congestion.

Communication terminal apparatus A receives signals with the common masked symbol structure from base stations 701 and 702. Since the respective signals from base stations 701 and 702 are signals containing the common masked symbol structure, the signals can be subjected to the same processing in a cell search even when the signals are used in different systems.

In the same way as in the first embodiment, communication terminal apparatus A processes the signal in system 1 from base station 701 and that in system 2 from base station 702. Then, the apparatus A stores respective received levels of first search codes at respectively detected timings in memory circuit 407.

The apparatus A next limits long code candidates to search using the second search code, and specifies the long code specific to a cell from the long code candidates. After the apparatus A thus executes the series of initial synchronization processing, the apparatus A decodes the data in the perch channel and broadcast channel. It is thereby possible to calculate the propagation loss and interference amount using the information broadcast in the broadcast channel such as the base station transmit level and interference level in the base station, and to obtain the required transmit power with the obtained results taken into consideration.

Specifically, the broadcast channel signal is subjected to the radio reception processing in radio reception circuit 402, then despread in matched filter 403, while being sampled in sampling circuit 405 with respect to a path of which a timing of a signal is detected in search circuit 404, and demodulated in demodulation circuit 406 to be control signal data. The control signal data is subjected to calculation processing in a calculation section which is not shown in the figure, thereby obtaining the required transmit power with the propagation loss and interference amount taken into consideration. The obtained required transmit power is provided to comparison selection circuit 408. The above processing is executed for each of base stations 701 and 702.

Comparison selection circuit 408 compares the received level in system 1 to that in system 2, both stored in memory circuit 407, while comparing the required transmit power to each of base stations of 701 and 702 to select. Further, comparison selection circuit 408 selects a system desirable as a connection destination considering the received level and the required transmit power, and notifies the obtained result to connection processing control circuit 409, thereby executing the connection processing to the selected system.

As described above, in this embodiment, since the communication terminal apparatus uses, for example, required transmit power with the propagation loss and interference amount taken into consideration besides the received level of first search code, in deciding on the connection or switching, it is possible for the communication terminal apparatus to select the connection destination more exactly. Further, it is thereby possible to select the system enabling the connection in the smallest output and the system with low congestion.

This embodiment explains about the case where the communication terminal apparatus uses, for example, the required transmit power with the propagation loss and interference amount (congestion degree in a system) taken into consideration besides the received level of first search code, deciding on the connection or switching, however it may be also possible to apply the present invention to the case where the communication terminal apparatus decides a system to connect by considering, in addition to the above-mentioned parameters, communication contents in the system such as services for speech communications, low-rate/high-rate packet communications and data communications, and a hand-over frequency due to a moving speed of the communication terminal apparatus.

In particular, by considering the hand-over frequency and service contents when the communication terminal apparatus decides the system to connect, it is possible to avoid the connection to a system in which a received level becomes high suddenly, thus enabling the communication apparatus to select the optimal connection destination even in moving.

### (Fourth embodiment)

This embodiment explains about the case where a communication terminal apparatus requests a desiring communication service to a base station in a system to which the communication terminal apparatus requests a connection, while reporting information such as received level information and the congestion degree in another system which are measured by the apparatus to the base station, and based on the information from the communication apparatus, the base station decides the condition of the system the base station directs, and introduce a system to be connected to the communication terminal apparatus.

Communication terminal apparatus A receives signals with the common masked symbol structure from base stations 701 and 702, and in the same way as in the first embodiment, processes the signal in system 1 from base station 701. Next, in the same way as in the third embodiment, the apparatus A limits long code candidates to search using the second search code, and specifies the long code specific to a cell from the long code candidates. After the apparatus A thus executes the series of initial synchronization processing, the apparatus A decodes the data in the perch channel and broadcast channel to obtain information such as the congestion degree in system 1 from information broadcast in the broadcast channel. The apparatus A executes the same processing in system 2 as in system 1 to obtain the information such as the congestion degree in system 2.

The communication terminal apparatus A notifies base station 701 to which a connection is requested of the information such as the congestion degrees in systems 1 and 2. Base station 701 judges the condition of system 1 the base station directs based on the information such as the congestion degrees reported from communication terminal apparatus A. For the judgement at this point, the base station can use, for example, a threshold-decision for the parameters such as the congestion degree reported from communication terminal apparatus A.

When base station 701 judges that it is difficult to accommodate communication terminal apparatus A in system 1, base station 701 detects another system which can accommodate communication terminal apparatus A at present. For example, base station 701 communicates with base station 702 in system 2 which is reported from communication terminal apparatus A to request base station 702 to examine whether base station 702 can accommodate communication terminal apparatus A. When the results shows that it is possible to accommodate communication terminal apparatus A in system 2, base station 701 notifies (introduces) system 2 as a connection destination to communication terminal apparatus of system 2.

Communication terminal apparatus A next executes the connection processing to system 2.

In addition, the above-mentioned connection processing is the same as in both cases of initial connection processing and hand-over processing.

According to this embodiment, since a base station judges the condition of the system the base station directs and introduces a system to be connected based on information reported from a communication terminal apparatus to the apparatus, the communication terminal apparatus can find promptly a system capable of accommodating the apparatus at that time, and connects to the system promptly.

This embodiment explains the case where a base station introduces another system capable of accommodating a communication terminal apparatus to the communication terminal apparatus, however, in the present invention, it may be also possible that the base station introduces a plurality of systems each capable of accommodating a communication terminal apparatus to the communication terminal apparatus, and the communication terminal apparatus executes the processing described in the first to third embodiments for the plurality of systems to select a system to connect.

### (Fifth embodiment)

This embodiment explains the case where different systems are a public system and a private system. First, the following description explains the case where communication terminal apparatus A illustrated in FIG.7A is turned on. In this case, system 1 is the private system in the CDMA/TDD system and system 2 is the public system in the CDMA/TDD system. In addition, the frame structure in the public system is as illustrated in FIG.2B, and that in the private system is as illustrated in FIG.2B, each having the common structure by containing the first search code. In addition, it is assumed in this case that first search codes SC0 to SC3 are known in the public and private systems.

Base stations 701 and 702 are each provided with the radio communication apparatus illustrated in FIG.5 and FIG.6, and communication terminal apparatuses A and B are each provided with the communication terminal apparatuses illustrated in FIG.4.

Base station 701 transmits respective signals for systems 1-1 to 1-3 in the TDD system illustrated in FIG.2C, and base station 702 transmits a signal in the TDD system illustrated in FIG.2B. Base stations 701 and 702 each time-multiplexes first search code FSC and second search code SSC at a position to be masked in the control channel signal that is transmission data. The first search code FSC and second search code SSC are multiplexed to the control channel signal, while being switched properly by switch 603 corresponding to the masking control signal with a pulse waveform illustrated in FIG.6.

In addition, the control channel signal is multiplied by a code, obtained by multiplying short code SC0 by long code LCj in multiplier 602, in multiplier 601. The thus frame-structured signal is subjected to the predetermined radio transmission processing in radio transmission circuit 503, and then transmitted through antenna 504.

Communication terminal apparatus A receives signals with the common masked symbol structure from base stations 701 and 702. Since the respective signals from base stations 701 and 702 are signals containing the common masked symbol structure, and the first search code in each signal is known, the signals can be subjected to the same processing in a cell search even when the signals are used in different systems.

Communication terminal apparatus A executes timing detection on the respective signals in systems 1 and 2 respectively from both base stations 701 and 702, and stores qualities, for example, received levels of the first search codes obtained at the detected timings in memory circuit 407, in the same way as in the first embodiment.

The received levels of signals in respective systems stored in memory circuit 407 are compared in comparison selection circuit 408. Comparison selection circuit 408 selects a system with a higher received level, and outputs a connection destination selection signal indicative of the connection to the system with the higher received level to connection processing control circuit 409 to execute the connection processing to the selected system.

In addition, in the same way as in the first embodiment, when communication terminal apparatus B illustrated in FIG.7A is turned on, the same processing in the above-mentioned case is executed. Further, as illustrated in FIG.7B or FIG.7C, the same processing in the first embodiment is executed in the case where communication terminal apparatus A performs a hand-over (HO) from system 1 (private system) to system 2 (public system).

As described above, in this embodiment, by the use of signals with the common masked symbol structure in different systems, it is possible to detect the connection destination automatically between different systems (private system and public system).

In addition, it may be possible to prepare the same first search code in the private system as that in the public system, and identify the private or public system, and the private system for the terminal apparatus by the processing using the second search code. However, by setting different first search codes (SC1 to SC3) in the private systems for each system as in this embodiment, it is possible for a communication terminal apparatus to identify the system for the apparatus easily only by the first search code even in the case where the private systems coexist in the same frequency band. Further, by preparing tens to hundreds types of first search codes for private systems, it is possible for a base station in each system to set a first search code at random as the first search code for the system the base station directs in the self-control, and further possible for a base station in each private system to detect a received level of the first search code, find out a first search code that is not used in the peripheral, and use the found first search code as the first search code for the system the base station directs.

### (Sixth embodiment)

This embodiment explains about the case where a received level in a private system is first measured among different systems to decide using a threshold whether or not a connection to the system is possible, and only when the received level is lower than the threshold, a received level in a public system is measured to connect.

Communication terminal apparatus A receives signals with the common masked symbol structure respectively from base stations 701 and 702, and first processes the signal in the private system from base station 701. In other words, the apparatus A executes timing detection with the first search code in matched filter 402 and search circuit 404. Specifically, the apparatus A executes despreading processing on a symbol spread only with the first search code which is common to each system (masked symbol), obtains the correlation value, and detects a position for the highest correlation value, thereby executes the timing detection.

Then, the apparatus A executes a decision on the received level of the first search code at the detected timing using the threshold. When the detected received level exceeds the threshold, communication terminal apparatus A provides a connection destination selection signal indicative of the connection to the private system to connection processing control circuit 409 to execute the connection processing to the private system.

On the other hand, when the above-mentioned received level is lower than the threshold, communication terminal apparatus A processes the signal with the common masked symbol structure from base station 702. In other words, in the same way as in the above-mentioned case, the apparatus A executes the timing detection with the first search code in matched filter 402 and search code 404, and stores the received level of the first search code at the detected timing in memory circuit 407. In addition, control circuit 410 executes the switching between the processing for the signal in the private system from base station 701 and that for the signal in the public system from base station 702.

Then, the apparatus A executes the decision on the received level of the first search code at the detected timing using the threshold. When the detected received level exceeds the threshold, communication terminal apparatus A provides a connection destination selection signal indicative of the connection to the public system to connection processing control circuit 409 to execute the connection processing to the public system.

As described above, since the received level in either system is first measured to decide using the threshold whether or not a connection to the system is possible, and only when the received level is lower than the threshold, the received signal in another system is measured, so as to select a system corresponding to communication conditions and propagation environments and connect to the system by switching between systems, the comparison processing between received levels is not necessary, and it is possible to execute the connection processing to an optimal system promptly.

In addition, in this embodiment, the signal in the private system from base station 701 is first processed, however it may be possible to first process the signal in the public system from base station 702.

In the private and public systems in above-mentioned fifth and sixth embodiments, by making the physical layer structures concerning the initial synchronization executed using second search code common or almost equal as much as possible in the private and public systems, it is possible to for an apparatus to have a common circuit to both systems, thereby enabling the apparatus to be simplified.

In the private and public systems in above-mentioned fifth and sixth embodiments, as described in the third embodiment, it may be possible for the communication terminal apparatus to use the required transmit power with the propagation loss and interference amount taken into consideration besides the received level of first search code, deciding on the connection or switching. Further, as described in the fourth embodiment, it may be possible that the communication terminal apparatus requires desired communication services to a system to which the apparatus request a connection, while reporting information such as received level information and the congestion degrees in other systems which are measured by the apparatus to a base station, and the base station judges the condition of the system the base station directs and introduces a system to be connected to the apparatus based on information reported from the communication terminal apparatus.

The above-mentioned first to sixth embodiments explain the case where first search code FSC and second search code SSC are multiplexed at a position to be masked in the control channel signal to multiplex to the control channel signal, however it may possible to apply the present invention to the case where first search code FSC and second search code SSC are not multiplexed, and each is multiplexed time-separately to the control channel signal.

The above-mentioned first to sixth embodiments explain the case where short code SC0 and long code LCj are multiplied beforehand, and then multiplied by the control channel signal, however it may be possible to apply the present invention to the case where long code LCj is not multiplied by the control channel signal beforehand.

In addition, it may be possible in the above-mentioned first to sixth embodiments to use as a threshold a different level for each system. In this case, it may be possible that the threshold is set or stored beforehand for each system, that the threshold is reported from a base station in each system, and that the threshold is calculated in a communication terminal apparatus based on information from a base station.

Further, since a minimum received level required to connection to a system and a received level measured to detect a hand-over destination in the connection are usually different, it may be possible to prepare a plurality of types of thresholds corresponding to respective received levels or processing in different cases. It is thereby possible to execute an appropriate decision using the threshold corresponding to respective received levels or processing, enabling the optimal connection processing. Furthermore, it may be possible to simplify the processing by not measuring a received level in another system when the received level in a system is higher than the threshold. Also in this case, it may be possible that the threshold is set or stored beforehand for each system, that the threshold is reported from a base station in each system, and that the threshold is calculated in a communication terminal apparatus based on information from a base station.

As explained above, since the radio communication apparatus and radio communication method of the present invention use signals with the common masked symbol structure, it is possible therein to automatically detect or switch a connection destination. It is thereby possible to use a system which is as small as possible (cell radius, i.e., low transmission power is possible) and a system with vacancies. Further, since it is possible to accommodate a communication terminal apparatus efficiently in both senses of area and frequency, it is possible to improve the spectral efficiency. Furthermore, it is possible to reduce power consumption of the communication terminal apparatus, thereby enabling the apparatus to be used longer.

The present invention is not limited to the above described embodiments, and various variations and modifications may be possible without departing from the scope of the present invention.

This application is based on the Japanese Patent Application No.HEI10-348283 filed on December 8, 1998, entire content of which is expressly incorporated by reference herein.

## Claims

1. A communication terminal apparatus comprising:
a reception section(402,403,404) which receives a signal with a structure having at least one first search code in a unit frame from a communication partner in each of at least two different systems;
a selection section(408) which compares a respective quality of said signal with the structure received from the communication partner in each of said at least two different systems to each other, and based on a compared result, selects the communication partner to connect; and
a connection section(409) which executes connection processing to a selected communication partner.

2. A communication terminal apparatus comprising:
a reception section(402,403,404) which receives a signal with a structure having at least one first search code in a unit frame from a specific communication partner;
a decision section which executes a decision on a quality of said signal with the structure received from said specific communication partner using a threshold; and
a connection section(409) which executes connection processing to said specific communication partner only in the case where said quality exceeds a predetermined threshold.

3. The communication terminal apparatus according to claim 1, further comprising:
a synchronization processing section which executes synchronization processing using a second search code; and
a decoding section which decodes information concerning transmission provided from the communication partner using a broadcast channel signal,
wherein said quality includes decoded information concerning transmission.

4. The communication terminal apparatus according to claim 1, further comprising:
a measuring section which measures a received quality from the communication partner in each of said at least two different systems; and
a notification section which notifies a specific communication partner of information on said received quality,
wherein said connection section executes the connection processing to a connection destination according to information on said connection destination selected by said specific communication partner based on said received quality notified from said apparatus.

5. A base station apparatus comprising:
a frame constructing section which executes construction of a structure of a frame having at least one first search code in a unit frame; and
a transmission section which transmits a signal with said structure.

6. The base station apparatus according to claim 5, further comprising:
a judging section which judges based on information on a received quality measured by a communication partner whether or not a system said apparatus directs is capable of accommodating said communication partner;
a detection section which when said system is not capable of accommodating said communication partner, detects another system capable of accommodating said communication partner; and
a notification section which notifies said communication partner of a detected result.

7. A radio communication method comprising the steps of:
receiving a signal with a structure having at least one first search code in a unit frame from a communication partner in each of at least two different systems;
comparing a respective quality of said signal with the structure received from the communication partner in each of said at least two different systems to each other, and based on a compared result, selecting the communication partner to connect; and
executing connection processing to a selected communication partner.

8. A radio communication method comprising the steps of:
receiving a signal with a structure having at least one first search code in a unit frame from a specific communication partner;
executing a decision on a quality of said signal with the structure received from said specific communication partner using a threshold; and
executing connection processing to said specific communication partner only in the case where said quality exceeds a predetermined threshold.

9. The radio communication method according to claim 7, further comprising the steps of:
executing synchronization processing using a second search code; and
decoding information concerning transmission from the communication partner provided using a broadcast channel signal,
wherein said quality includes decoded information concerning transmission.

10. The radio communication method according to claim 7, further comprising the steps of:
measuring a received quality from the communication partner in each of said at least two different systems; and
notifying a specific communication partner of information on said received quality,
wherein the connection processing is executed to a connection destination according to information on said connection destination selected by said specific communication partner based on said received quality notified from said apparatus.

11. The radio communication method comprising the steps of:
executing construction of a structure of a frame having at least one first search code in a unit frame; and
transmitting a signal with said structure.

12. The radio communication method according to claim 11, further comprising:
judging based on information on a received quality measured by a communication partner whether or not a system is capable of accommodating said communication partner;
detecting when said system is not capable of accommodating said communication partner, detects another system capable of accommodating said communication partner; and
notifying said communication partner of a detected result.
